# EUROPÄISCHE PATENTSCHRIFT

(11) **EP 2 448 647 B1**
(45) Veröffentlichungstag und Bekanntmachung des Hinweises auf die Patenterteilung: **21.02.2018**
(21) Anmeldenummer: 10724317.2
(22) Anmeldetag: 12.06.2010
(51) Int. Cl.: B01D 29/48, B01D 29/52, B01D 29/58, B01D 29/66

(54) **FILTERVORRICHTUNG**
FILTER DEVICE
DISPOSITIF DE FILTRATION

(30) Priorität: 02.07.2009 DE 102009031358
(43) Veröffentlichungstag der Anmeldung: 09.05.2012
(73) Patentinhaber: Hydac Process Technology GmbH, 66538 Neunkirchen (DE)
(72) Erfinder: GESSNER, Christian, 66606 St. Wendel (DE); SCHLICHTER, Bernhard, 66123 Saarbrücken (DE)
(74) Vertreter: Bartels & Partner
(86) Internationale Anmeldenummer: PCT/EP2010/003552
(87) Internationale Veröffentlichungsnummer: WO 2011/000471

(56) Entgegenhaltungen:
- EP-A1- 0 106 798
- DE-A1-102007 003 925
- GB-A- 1 574 998
- US-A- 2 442 818

## Beschreibung

Die Erfindung betrifft eine Filtervorrichtung mit den Merkmalen im Oberbegriff von Patentanspruch 1. Die DE 199 56 859 A1 offenbart eine Filtervorrichtung mit konisch ausgebildeten Filterelementen in Form von sog. Spaltsiebrohrfilterelementen mit einer Rückspüleinrichtung. Mit der Rückspüleinrichtung werden vorzugsweise alle Filterelemente nacheinander regeneriert. Während der Rückspülung einzelner Elemente wird die Filtration über die verbleibenden Elemente fortgesetzt, so dass der Filtrationsbetrieb zu keiner Zeit unterbrochen werden muss.

Solche konischen Spaltsiebrohrfilterelemente eignen sich sehr gut für eine Rückspülung abfiltrierter Partikel und zur Unterstützung des Rückspülvorganges schlägt die bekannte Lösung eine Drucksteuereinrichtung vor, die an dem rückzuspülenden Filterelement einen Unterdruck erzeugt, um dergestalt impulsartig die Abreinigung zu veranlassen. Eine vergleichbare Drucksteuereinrichtung mit impulsartiger Abreinigungscharakteristik ist auch in der DE 10 2007 054 737 A1 für eine gattungsgemäße Filtervorrichtung aufgezeigt.

In der dahingehenden DE 10 2007 003 925 A1 ist eine Filtervorrichtung aufgezeigt mit einer Mehrzahl von Filterelementen, die in einem Filtergehäuse aufgenommen sind, das nach oben hin mit einem Deckel und nach unten hin von einem Boden abgeschlossen ist, mit einem Filtereinlass für ein zu filtrierendes Fluid und einem Filterauslass für das gefilterte Fluid, wobei die Filterelemente für eine Filtration oder Rückspülung in beiden Richtungen durchströmbar sind, wobei zwischen zumindest einem Teil der Filterelemente und dem Filterauslass je ein weiteres Filterelement in Form eines Feinfilterelementes, in Bereichen des Strömungsweges des Fluids angeordnet ist, das von dem jeweiligen, dem weiteren Filterelement zugeordneten Filterelement vorfiltriert ist, wobei die Feinfilterelemente rohrförmig ausgebildet sind. Aus der EP 0 106 798 A1 geht ein Flüssigkeitssauger hervor. Der Flüssigkeitssauger weist einzelne Filtereinsätze auf, die konzentrisch und radial voneinander beabstandet angeordnet sind.

Durch die US 2 442 828 gehört ein Honigsieb zum Stand der Technik, bei dem vier topfförmige Filtersiebe ineinander gesetzt sind, die von innen nach außen eine höhere Gewebedichte haben.

Die GB 1 574 998 zeigt eine Filterelementanordnung mit zwei gleich langen Filterelementen auf, die koaxial zueinander in einem Filtergehäuse angeordnet sind.

Ausgehend von diesem Stand der Technik liegt der Erfindung die Aufgabe zugrunde, eine Filtervorrichtung der genannten Art zur Verfügung zu stellen, die bei einfach durchzuführender Regenerierung für die Einzelfilterelemente verbesserte Abreinigungsergebnisse und Abscheideraten im eigentlichen Filtrationsbetrieb ermöglicht.

Diese Aufgabe löst eine Filtervorrichtung mit den Merkmalen des Patentanspruches 1 in seiner Gesamtheit.

Gemäß dem Kennzeichen von Anspruch 1 ist vorgesehen, dass die Filterelemente einen inneren Filterhohlraum aufweisen, der endseitig eine Eingangsöffnung im Boden zumindest teilweise überdeckt, über die sowohl bei der Filtration als auch beim Rückspülen verschmutztes Fluid führbar ist, dass jedes Feinfilterelement ein Filterelement radial unter Einhalten eines vorgebbaren Abstandes umfasst, und dass die Feinfilterelemente eine größere Axialerstreckung aufweisen als die Filterelemente. Zwischen zumindest einem Teil der Filterelemente und dem Filterauslass ist je ein weiteres Filterelement, in Form des Feinfilterelementes, in Bereichen des Strömungsweges des Fluids angeordnet, das von dem jeweiligen, dem Feinfilterelement zugeordneten Filterelement vorfiltriert ist. Durch das Zusammenwirken von Filterelement mit Feinfilterelement lässt sich die vorgegebene Filterfeinheit durch die in der Filtrationskette den vorgeordneten Filterelementen nachgeschalteten Feinfilterelementen deutlich erhöhen. So kann beispielsweise das Filterelement eine Filterfeinheit von 50 *µ*m bis 100 *µ*m im Rahmen der Vorfiltration aufweisen und das weitere oder Feinfilterelement hat dann eine Filterfeinheit von 5 bis 10 *µ*m, um noch feinsten Partikelschmutz aus dem Vorfiltrat herauszuholen.

Da bei einer besonders bevorzugten Ausführungsform die Filterelemente aus sog. Spaltsiebrohrfilterelementen gebildet sind, die sowohl in Filtrations- als auch in Rückspülrichtung des Fluids gegenüber Differenzdrücken, die auch stoß- oder impulsartig auftreten können, wenig empfindlich sind; die Feinfilterelemente sich aber aufgrund ihres Materialaufbaues bereits als sehr druckempfindlich erweisen können, werden diese bei der Rückspülung oder Regeneration der Vorfilterelemente nicht rückgespült und insoweit geschont. Mit der erfindungsgemäßen Filtervorrichtung ist es mithin erstmals möglich, eine Grob- mit einer Feinfiltration über separate Filterelementanordnungen miteinander zu kombinieren und dennoch eine Abreinigung oder Regenerierung im Rückspülmodus für die Vorfiltrationsstufe zu erreichen.

Es kann vorgesehen sein, die robust ausgestalteten Filterelemente der Vorfiltrationsstufe im Filtergehäuse zu belassen und dann nur das Feinfilterelement bei entsprechendem Verschmutzungsgrad gegen ein Neu-Feinfilterelement auszutauschen.

Die Feinfilterelemente dienen somit zur Abscheidung von Partikeln, die von den Filterelementen, vorzugsweise als Spaltsiebrohrfilterelemente ausgebildet, nicht erfasst werden. Die Feinfilterelemente können sich wiederum über die gesamte Bauhöhe oder Baulänge des Filtergehäuses in diesem erstrecken und somit gegenüber den Filterelementen eine deutlich erhöhte wirksame Filterfläche aufweisen können.

Im normalen Filtrationsbetrieb werden sowohl die Filterelemente als auch die weiteren Filterelemente, insbesondere in Form der Feinfilterelemente, von innen nach außen durchströmt und das derart abfiltrierte Fluid gelangt auf die Filtrat- oder Reinseite des Filtergehäuses für das sich anschließende Abführen über den Filterauslass des Gehäuses. Zeitgleich hierzu wird aber eine Teilmenge des Fluids, das von den Filterelementen vorfiltriert wurde, entlang der Innenseite des jeweiligen Feinfilterelementes einer Filterelementanordnung geführt, um dergestalt mittels einer zentralen Deckelführung im oberen Gehäuseteil ein rückzuspülendes bzw. zu regenerierendes Filterelement derart mit dem Vorfiltrat anzuströmen, dass die Zufuhr im wesentlichen ausschließlich über den Innenraum des hohlzylindrisch ausgeführten Feinfilterelementes erfolgt, das von der Rückspülung ausgeklammert bleibt und insoweit im Hinblick auf das empfindliche Filtermaterial geschont wird. Die sonstigen Feinfilterelemente verbleiben für die übliche Filtration in den Bereichen des hierfür vorgesehenen Fluid-Strömungsweges.

Die Feinfilterelemente sind bevorzugt zylindrisch ausgebildet und können in der Art eines Tiefenfilters aus Bahnen von Papier, Textilien oder Kunststoffen fortlaufend gewickelt sein, so dass eine Art Wickelfilter oder ein gewickelter Bandfilter gebildet ist. Anstelle einer dahingehenden Wickelkerze können auch geschäumte Kunststoffelemente zum Einsatz kommen oder plissierte Filterelemente, wobei sich das jeweilige Elementmaterial an entsprechenden Stützgittern oder Stützschichten für den Erhalt einer drucksteifen Bauweise abstützen kann. Sofern die Feinfilterelemente über eine plissierte Oberflächenform verfügen, ist deren wirksame Filteroberfläche vergrößert.

Besonders vorteilhaft ist es, die Porengröße des Filtermaterials über die Tiefe der Feinfilterelemente zu verändern und insbesondere an der dem zu filtrierenden Fluid zugewandten Seite eine größere Porengröße oder Maschenweite zu wählen als auf der abgewandten Reinseite, was auch über eine Verdichtung des Materialwickel-Verbundes nach außen hin erfolgen kann.

Bevorzugt sind die Filterelemente und die Feinfilterelemente in Abständen zueinander entlang eines Kreisbogens innerhalb des Filtergehäuses angeordnet. Es kann aber auch vorteilhaft sein, die Filterelementanordnung, bestehend aus jeweils einem Filterelement und einem Feinfilterelement, in Gruppen unterteilt mehrfach entlang von zylindrischen Kreisbögen anzuordnen, die dergestalt dann zur Längsachse des Filtergehäuses in konzentrisch angeordneten Kreisen zueinander verlaufen.

Bevorzugt sind je ein Filterelement und ein Feinfilterelement in einer Filterelementanordnung zusammengefasst und entlang einer vertikalen Längsachse, die parallel zu der Längsachse des Filtergehäuses verläuft, in diesem aufgenommen. Das Filtergehäuse weist gleichfalls Zylinderform auf und sowohl ein Deckel als auch ein Boden können als ebene Platten ausgebildet mit dem sonstigen aus einem Zylinderrohr gebildeten Filtergehäuse verschraubt sein, so dass die Anordnung sich auch für hohe Fluiddrücke eignet.

Vorzugsweise ist weiter vorgesehen, dass der Deckel eine Vorrichtung zum Fixieren der Feinfilterelemente innerhalb des Gehäuses enthält. Die Feinfilterelemente bedürfen insbesondere eines in axialer Richtung wirkenden Niederhalters, der die Feinfilterelemente vom Ablösen von ihrem Sitz im Bereich des Bodenteils des Filtergehäuses hindert. Die Vorrichtung zum Fixieren der Feinfilterelemente oder die Halteeinrichtung weist insbesondere eine bevorzugt kreisförmig ausgebildete Scheibe auf mit Durchbrüchen etwa im Größenbereich des Durchmessers des Außendurchmessers der Feinfilterelemente oder kleiner. Die einzelnen Durchbrüche sind über Wandteile der Scheibe voneinander beabstandet und die dahingehenden Wandteile kommen in Anlage mit den axialen Enden der Feinfilterelemente. Sofern der verbleibende Durchbruch den fluidführenden Mittenraum des jeweiligen Feinfilterelementes übergreift, ist für den aufgezeigten Rückspülvorgang die Zufuhr von vorfiltriertem Fluid zu dem rückzuspülenden Filterelement möglich. Dabei wird ein Teilstrom vorfiltrierten Fluids, das im Bypass an dem filtrierenden Feinfilterelement in dessen Hohlraummitte vorbeigeführt und derart von allen filtrierenden Anordnungen zugeführt wird, der jeweils rückzuspülenden Anordnung zur Verfügung gestellt.

Die scheibenförmige Halteeinrichtung lässt sich über einen Haltearm mit einem entsprechenden Bajonettverschluss innerhalb des Filtergehäuses festlegen und dergestalt werden über die Scheibe die Feinfilterelemente in ihrer Einbaulage im Filtergehäuse gehalten. Dank des Bajonettverschlusses ist im Bedarfsfall ein rascher Austausch der Feinfilterelemente im zugesetzten, verbrauchten Zustand gegen ein Neuelement ebenso möglich wie der Tausch einer Gesamt-Elementanordnung, bestehend aus Filterelement und Feinfilterelement.

Bei einer besonders bevorzugten Ausführungsform der erfindungsgemäßen Filtervorrichtung ist vorgesehen, dass eine Rückspüleinrichtung mit mindestens einem Rückspülarm von der Bodenseite des Filtergehäuses her unter das jeweils zuordenbare Filterelement gefahren wird, der die beim Rückspülen entstehende Rückfiltratmenge aus der Filtervorrichtung abführt. Zur Ansteuerung des jeweiligen Rückspülarmes dient eine Motor-Getriebeanordnung, die besonders bevorzugt auf der Unterseite der Filtervorrichtung angeordnet ist, so dass eine kurze Antriebsstrecke realisiert ist, was einem ruckfreien, zielgerichteten Betrieb des Rückspülarmes entgegenkommt.

Nachstehend ist die Erfindung anhand eines in der Zeichnung dargestellten Ausführungsbeispiels näher erläutert. Dabei zeigen in prinzipieller und nicht maßstäblicher Darstellung die
- Fig. 1: teilweise in Ansicht, teilweise im Längsschnitt dargestellt die Filtervorrichtung als Ganzes;
- Fig. 2: in vergrößerter Darstellung den Gegenstand des in Fig. 1 mit "X" bezeichneten Ausschnittkreises; und
- Fig. 3: eine perspektivische Ansicht einer Halteeinrichtung für Feinfilterelemente gemäß den Darstellungen in den Fig. 1 und 2.

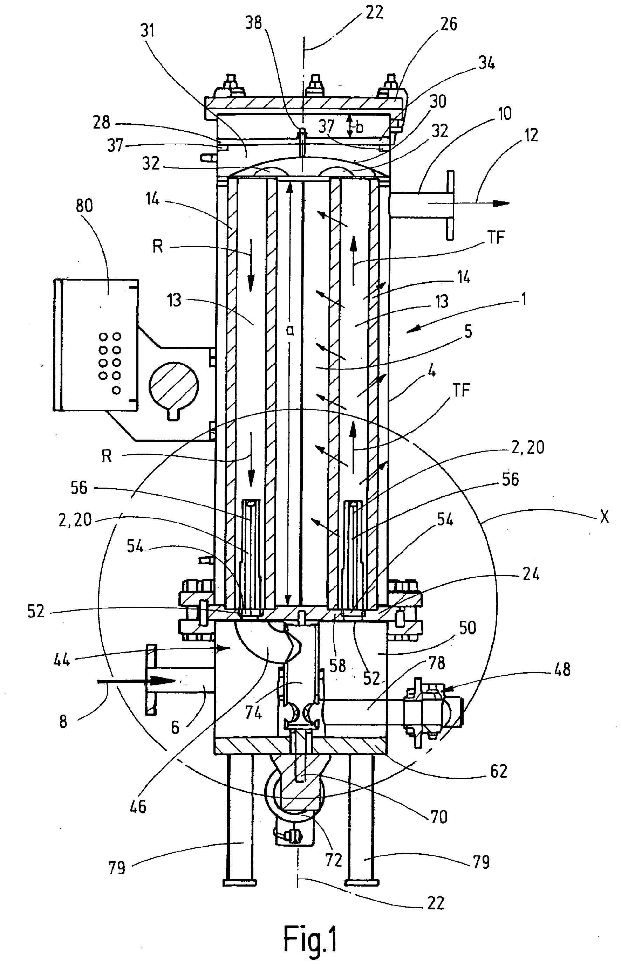

In der Fig. 1 ist teilweise in Ansicht, teilweise in einem Längsschnitt eine Filtervorrichtung 1 mit einem zylindrischen Filtergehäuse 4 gezeigt. Das Filtergehäuse 4 wird in Blickrichtung auf die Fig. 1 gesehen nach oben hin von einem Deckel 26 und nach unten hin von einem Boden 24 abgeschlossen. Der Deckel 26 und der Boden 24 sind über Flanschverbindungen mit dem zylindrischen Filtergehäuse 4 in üblicher und daher nicht näher dargestellter Art und Weise verschraubt. Unter dem Boden 24 ist ein Zwischengehäuse 50 angeordnet, das mit einem als Rohrstutzen ausgebildeten Filtereinlass 6 für die Zufuhr des Unfiltrats versehen ist. Mithin wird durch den Filtereinlass 6 von der Unterseite her der Filtervorrichtung 1 zu filtrierendes Fluid 8 zugeführt. Von der Vorrichtung gefiltertes Fluid 12 wird unterhalb des Deckels 26 durch einen Filterauslass 10 zur allgefälligen Weiterverwendung, beispielsweise in einen üblichen Hydraulikkreis, abgeführt.

Der Boden 24 beinhaltet einzelne, voneinander beabstandete Aufnahmen 52 für Filterelemente 2, die in dem gezeigten Ausführungsbeispiel als konische Spaltsiebrohrfilterelemente 20 ausgebildet sind, die sich von ihrer jeweiligen Eingangsöffnung 54 im Bereich des Bodens 24 nach oben hin verjüngen. Dahingehend metallische Spaltsiebrohrfilterelemente 20 sind für den vorliegenden Anwendungszweck aufgrund ihrer Druckstabilität ideal, wobei das zu filtrierende Fluidmedium das jeweilige Spaltrohr 20 von innen nach außen durchströmt, so dass sich Feststoffverschmutzungen, wie Partikel, an der Innenseite der Filterelemente 2 ablagern können. Mit zunehmender Verschmutzung steigt dann zwischen der Schmutz- und Reinseite des dahingehenden Filterelementes 2 der Differenzdruck und erreicht der Druckverlust den eingestellten Auslösedifferenzdruck, so beginnt eine automatische Rückspülung, bei der von außen nach innen die Partikel aus den Spalten des Filterelementes 2 herausgelöst und über die Innenseite des Elementes 2 aus der Filtervorrichtung 1 abgeführt werden. Besteht das Spaltsiebrohrfilterelement 20 aus Edelstahlkomponenten, ist auch eine Behandlung von aggressiven Medien mit der erfindungsgemäßen Filtervorrichtung möglich.

Die Filterelemente 2 sind in radialen Abständen voneinander entlang eines in sich geschlossenen Kreisbogens oder Kreises innerhalb des Filtergehäuses 4 angeordnet. Bei einer nicht näher dargestellten Ausführungsform können auch entlang mehrerer konzentrisch zur Längsachse 22 des Filtergehäuses 4 angeordneter Kreise die Filterelemente 2 in Gruppen unterteilt angeordnet sein.

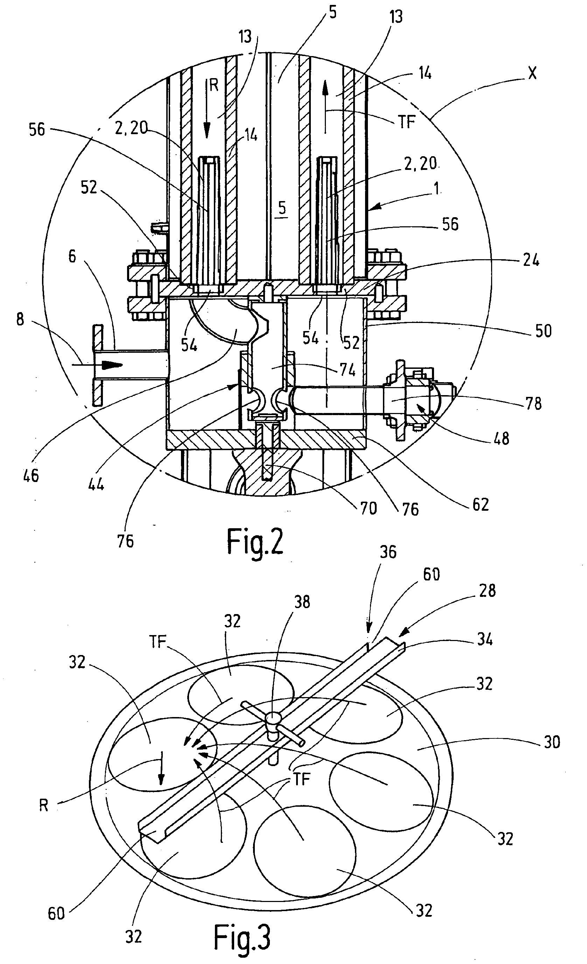

Wie insbesondere die Fig. 2 zeigt, münden die Filterelemente 2 mit ihrem unteren freien Einlassquerschnitt, also über ihre Eingangsöffnung 54, in die zylindrisch ausgebildeten Aufnahmen 52 im Boden 24 der Filtervorrichtung und sind mit dem Zwischengehäuse 50, das die Unfiltratmenge aufnimmt, fluidführend verbunden; es sei denn, wie dies die Fig. 2 darstellt, dass für einen Rückspülvorgang die noch näher zu erläuternde Rückspüleinrichtung 44 mit ihrem Rückspülarm 46 unter die Eingangsöffnung 54 eines rückzuspülenden Elementes 2 gebracht ist. Betrachtet man den normalen Filtrationsvorgang in Bereichen des Strömungsweges des Fluids, gelangt das dann zu filtrierende Fluid 8 über den Innenraum des Zwischengehäuses 50 in den inneren Filterhohlraum 56 des jeweiligen Filterelementes 2 und die Filterelemente 2 werden für die Filtrierung von innen nach außen hin durchströmt. Dergestalt ist durch die Filterelemente 2 eine Art Vorfiltration realisiert und das derart vorfiltrierte Fluid 12 strömt teilweise als Teilfluidmenge TF entlang einer Hauptachsenrichtung parallel zur Längsachse 22 des Filtergehäuses 4 in Blickrichtung auf die Figuren gesehen von unten nach oben durch den zylindrischen Hohlraum 13 eines Feinfilterelementes 14, wobei dieses gleichfalls von innen nach außen durchströmt wird, so dass im Inneren des Filtergehäuses 4 der Filtratraum 5 gebildet ist, über den das vor- und feinfiltrierte Fluid dann die Vorrichtung über den Filterauslass 10 verlässt.

Die Feinfilterelemente 14 sind in dem gezeigten Ausführungsbeispiel als zylindrische Feinfilterkerzen, beispielsweise aus einem Filtervlies bestehend, ausgebildet und diese können in bekannter Weise mit einer nicht näher dargestellten rohrförmigen Stützeinrichtung so weit ausgesteift sein, dass sie sich jedenfalls ohne weitere radiale Führung parallel zu der Längsachse 22 der Spaltsiebrohrfilterelemente 20 über die gesamte wesentliche Einbaulänge a des zylindrischen Filtergehäuses 4 erstrecken. Am Boden 24 sind die jeweiligen Feinfilterelemente 14 wiederum in einer konzentrisch um die Aufnahme 52 für die Filterelemente 2 angeordneten Aufnahme 58 radial unverschiebbar aufgenommen.

Nach oben hin sind die Feinfilterelemente 14 durch eine mit Abstand b zu dem Deckel 26 angeordnete Halteeinrichtung 28 festgelegt, die die Form einer in der Fig. 3 näher dargestellten Scheibe 30 einnimmt. Die Scheibe 30 ist, wie dies die Fig. 1 zeigt, als zu dem eben verlaufenden Deckel 26 konvexes, flächiges sowie kreisrundes Anlageteil ausgebildet, vorzugsweise in der Art eines metallischen Umformteils. Die Scheibe 30 weist jedem freien Filterelement 14 zugeordnet insgesamt sechs Durchbrüche 32 auf, die als kreisrunde Öffnungen in dem vorliegenden Ausführungsbeispiel dargestellt sind. Die Durchbrüche 32 haben einen geringfügig kleineren Durchmesser als der Außendurchmesser der Feinfilterelemente 14, so dass diese über die Scheibe 30 an deren Unterseite besser gehalten sind.

Die genannten Durchbrüche 32 müssen aber nicht mittig das freie stirnseitige Ende des jeweiligen Feinfilterelementes 14 übergreifen, sondern können dergestalt einen Versatz aufweisen, dass jedenfalls die benachbarten Wandteile zu den Durchbrüchen 32 eine Anlagefläche für das stirnseitige freie Ende des Filtermaterials des Feinfilterelementes 14 ausbilden. Insoweit kann die Anzahl der Durchbrüche 32 bei einer nicht näher dargestellten Ausführungsform auch von der Anzahl der Feinfilterelemente 14 abweichen. So kann bei einer bevorzugten Ausführungsform vorgesehen sein, dass nur drei Durchbrüche 32 zur Fluidversorgung von sechs Feinfilterelementen 14 herangezogen werden.

Für den Einbau der Scheibe 30 in das Gehäuse 4 der Filtervorrichtung 1 dient ein Haltearm 34, der in der Art eines U-Profils ausgebildet ist zwecks Verrasten mit der Unterseite zweier zur Längsachse 22 des Gehäuses 4 diametral einander gegenüberliegender Haltenasen 37, die auf der Innenseite des Filtergehäuses 4, beispielsweise über eine Schweißnahtverbindung festgelegt sind. Sofern der U-förmig ausgebildete Haltearm 34 in seinem jeweiligen gegenüberliegenden Endbereich eine Aussparung 60 aufweist, die von den Wandungsteilen der U-Form des Haltearmes 34 freigehalten sind, erlauben diese ein radiales Unterschwenken unter die genannten Haltenasen 37 für den Festlege- oder Verrastungsvorgang. Ferner ist mittig zwischen der Scheibe 30 und dem Haltearm 34 eine Spannschraube 38 angeordnet, die als Teil eines Bajonettverschlusses 36 eine axiale Lageeinstellung der Scheibe 30 gegenüber dem im Filtergehäuse 4 fixierten Haltearm 34 ermöglicht. Insbesondere lässt sich dergestalt durch Einstellen der Spannschraube 38 die Scheibe 30 der Halteeinrichtung 28 auf der Oberseite der Feinfilterelemente 14 mit einer definierten Klemmkraft festlegen.

Wie eine Zusammenschau aller Figuren zeigt, insbesondere unter Einbezug der Fig. 3, wird nicht die gesamte Vorfiltratmenge von innen nach außen durch das jeweils im Filterbetrieb befindliche Feinfilterelement 14 geführt, sondern immer nur eine Teilfluidmenge TF strömt in Pfeilrichtung gesehen von unten nach oben durch den zylindrischen Hohlraum 13 des jeweils zu betrachtenden Feinfilterelementes 14. Die dahingehenden Teilfluidmengen TF von fünf Filterelementen 2 werden über die Durchbrüche 32 in der Scheibe 30 in einem Sammelraum 31 zwischen Oberseite der Scheibe 30 und der Unterseite des Deckels 26 zusammengeführt und dergestalt unter Bildung einer gemeinsamen Rückspülmenge R demjenigen Feinfilterelement 14 zugeführt, und zwar über dessen mittigem Hohlraum 13, in dem das nunmehr rückzuspülende Filterelement 2 in Form des Spaltsiebrohrfilterelementes 20 angeordnet ist. Voraussetzung hierfür ist, dass die Rückspüleinrichtung 44 für dieses Element 2 sich in seiner wirksamen Rückspülposition befindet. Selbst wenn etwa 90 % der über das Filterelement 2 vorfiltrierten Menge dem Feinfilterelement 14 für einen weiteren Filtrationsvorgang von innen nach außen in Richtung des Filterauslasses 10 zugeführt wird und mithin nur 10 % als Teilfluidmenge TF im Inneren 13 des Feinfilterelementes 14 für die spätere Rückspülung verbleiben, zeigt doch die Darstellung nach der Fig. 3, dass sich dann insgesamt für das rückzuspülende Element 2, geliefert von fünf Feinfilterelementen 14, eine Rückspülfiltergesamtmenge etwa von 50 % an dem Gesamtfluidstrom für die Rückspülung ergibt; ein mehr als beachtlicher Wert. Der dahingehende Wert ist nur beispielhaft und kann durch Einstellen der Durchflusswerte geändert werden, beispielsweise in Abhängigkeit von den Durchflusswerten der eingesetzten Vor- und Feinfilterelemente 2,14.

Die bereits angesprochene Rückspüleinrichtung 44 der Filtervorrichtung 1 weist in an sich bekannter Weise einen Rückspülarm 46 auf, der in einer Gleitlagerung geführt zwischen dem Boden 24 des Gehäuses und einem weiteren Boden 62 des Zwischengehäuses 50 drehbar geführt ist. Der Rückspülarm 46 ist für seine Schwenkbewegung über eine Getriebezapfenverbindung 70 (s. Fig. 2) mit einem Getriebemotor 72 verbunden, der sich mit seiner nicht näher dargestellten Abtriebsachse senkrecht zu der Zapfenverbindung 70 orientiert. Der Rückspülarm 46 ist des Weiteren bogenförmig ausgebildet und mündet mit seiner einen freien Seite immer unter den freien Öffnungsquerschnitt (Eingangsöffnung 54) des jeweils rückzuspülenden Filterelementes 2. Mit seinem anderen freien Ende mündet der Rückspülarm 46 in eine zentrisch zur Längsachse 22 des Filtergehäuses 4 angeordneten Mittenführung 74, die an ihrer Unterseite über zwei diametral gegenüberliegende Auslässe 76 verfügt, um dergestalt immer eine fluidführende Verbindung sicherstellen zu können mit einer Anschlussleitung 78, die in Blickrichtung auf die Fig. 1 und 2 gesehen rechts in eine übliche Ventileinrichtung 48 ausmündet.

Aufgrund der Ventileinrichtung 48, die, da an sich bekannt, nur teilweise dargestellt ist, ermöglicht deren Ansteuerung, dass bei Freigabe ein schlagartiges, impulsartiges Abreinigen des jeweils rückzuspülenden Filterelementes 2 innerhalb der Gesamtvorrichtung möglich ist. Sobald ein Abreinigungsvorgang erfolgt ist, schließt die Ventileinrichtung 48 und der Rückspülarm 46 wird mittels des Getriebemotors 72 und der angesprochenen Getriebemechanik unter ein anderes freies, rückzuspülendes Filterelement 2 verfahren. Das bisher rückgespülte Filterelement 2 steht dann wiederum über seine untere freie Einlassöffnung für einen Filtrationsvorgang an verschmutztem Fluid zur Verfügung. Die Filtervorrichtung 1 ist bevorzugt in Ständerbauweise 79 ausgeführt und eine elektronische Steuer-, Regel- und Eingabeeinrichtung 80 dient der Gesamtbedienung der Vorrichtung unter Einbezug der Ventileinrichtung 48 sowie des Getriebemotors 72.

## Patentansprüche

1. Filtervorrichtung mit einer Mehrzahl von Filterelementen (2), die in einem Filtergehäuse (4) aufgenommen sind, das nach oben hin mit einem Deckel (26) und nach unten hin von einem Boden (24) abgeschlossen ist, mit einem Filtereinlaß (6) für ein zu filtrierendes Fluid (8) und einem Filterauslaß (10) für das gefilterte Fluid (12), wobei die Filterelemente (2) für eine Filtration oder Rückspülung in beiden Richtungen durchströmbar sind, wobei zwischen zumindest einem Teil der Filterelemente (2) und dem Filterauslaß (10) je ein weiteres Filterelement, in Form eines Feinfilterelementes (14), in Bereichen des Strömungsweges des Fluids angeordnet ist, das von dem jeweiligen, dem weiteren Filterelement (14) zugeordneten Filterelement (2) vorfiltriert ist, wobei die Feinfilterelemente (14) rohrförmig ausgebildet sind, **dadurch gekennzeichnet, dass** die Filterelemente (2) einen inneren Filterhohlraum (56) aufweisen, der endseitig eine Eingangsöffnung (54) im Boden (24) zumindest teilweise überdeckt, über die sowohl bei der Filtration als auch beim Rückspülen verschmutztes Fluid (8) führbar ist, dass jedes Feinfilterelement (14) ein Filterelement (2) radial unter Einhalten eines vorgebbaren Abstandes umfasst, und dass die Feinfilterelemente (14) eine größere Axialerstreckung (A) aufweisen als die Filterelemente (2).

2. Filtervorrichtung nach Anspruch 1 oder 2, **dadurch gekennzeichnet, dass** die Feinfilterelemente (14) mindestens das Dreifache der Länge der Filterelemente (2) aufweisen.

3. Filtervorrichtung nach Anspruch 1 oder 2, **dadurch gekennzeichnet, dass** die Filterelemente (2) eine konische oder zylindrische Gestalt und die Feinfilterelemente (14) eine zylindrische oder konische Gestalt aufweisen.

4. Filtervorrichtung nach einem der Ansprüche 1 bis 3, **dadurch gekennzeichnet, dass** die Feinfilterelemente (14) als gewickelte Tiefenfilter aus Papier, Textilien oder Kunststoffmaterialien gebildet sind.

5. Filtervorrichtung nach einem der Ansprüche 1 bis 4, **dadurch gekennzeichnet, dass** die Feinfilterelemente (14) aus einem faserförmigen, nicht gewebten und gewickelten Vlies gebildet sind.

6. Filtervorrichtung nach einem der Ansprüche 1 bis 5, **dadurch gekennzeichnet, dass** die Feinfilterelemente (14) aus einem plissierten Material bestehend sich an einem Stützelement abstützen.

7. Filtervorrichtung nach einem der Ansprüche 1 bis 6, **dadurch gekennzeichnet, dass** die Feinfilterelemente (14) an ihrer dem zu filtrierenden Fluid (8) zugewandten Seite eine größere Porengröße oder Maschenweite aufweisen als an ihrer Reinseite (18).

8. Filtervorrichtung nach einem der Ansprüche 1 bis 7, **dadurch gekennzeichnet, dass** die Filterelemente (2) und die sie umgebenden Feinfilterelemente (14) in Abständen zueinander entlang mindestens eines Kreisbogens oder eines in sich geschlossenen fiktiven Kreises innerhalb des Filtergehäuses (4) angeordnet sind.

9. Filtervorrichtung nach einem der Ansprüche 1 bis 8, **dadurch gekennzeichnet, dass** die Filterelemente (2) als Spaltsiebrohrfilterelemente (20), vorzugsweise aus Edelstahlmaterialien aufgebaut, ausgebildet sind.

10. Filtervorrichtung nach einem der Ansprüche 1 bis 9, **dadurch gekennzeichnet, dass** die Filterelemente (2) und die Feinfilterelemente (14) mit paralleler Längsachse zur Längsachse (22) des Filtergehäuses (4) in koaxialer Anordnung im Filtergehäuse (4) aufgenommen sind.

11. Filtervorrichtung nach einem der Ansprüche 1 bis 10, **dadurch gekennzeichnet, dass** das Filtergehäuse (4) eine zylindrische Gestalt aufweist und endseitig mit dem verschraubbaren Boden (24) und dem Deckel (26) versehen ist, wobei der Deckel (26) eine mit Abstand (b) zu ihm angeordnete Halteeinrichtung (28) für die Feinfilterelemente (14) aufnimmt.

12. Filtervorrichtung nach Anspruch 11, **dadurch gekennzeichnet, dass** die Halteeinrichtung (28) eine in das Filtergehäuse (4) einsetzbare Scheibe (30) ist, die Durchbrüche (32) aufweist, wobei benachbart zu jedem Durchbruch (32) ein Feinfilterelement (14) radial und/oder axial lösbar an der Scheibe (30) festgelegt ist und dass der jeweilige Durchbruch (32) für einen Fluiddurchlaß einer Teilfluidmenge (TF) die freie fluidführende Stirnseite des Feinfilterelementes (14) zumindest teilweise übergreift.

13. Filtervorrichtung nach Anspruch 11 oder 12, **dadurch gekennzeichnet, dass** die Scheibe (30) durch einen sich zumindest radial an dem Filtergehäuse (4) über Haltenasen (37) abstützenden Haltearm (34) gehalten ist.

14. Filtervorrichtung nach Anspruch 13, **dadurch gekennzeichnet, dass** der Haltearm (34) durch eine Art Bajonettverschluß (36) festlegbar ist.

15. Filtervorrichtung nach Anspruch 14, **dadurch gekennzeichnet, dass** die Scheibe (30) eine Spannschraube (38) zur axialen Klemmung des Bajonettverschlusses (36) und als Teil derselben aufweist.

16. Filtervorrichtung nach einem der Ansprüche 1 bis 15, **dadurch gekennzeichnet, dass** zum Rückspülen eine Rückspüleinrichtung (44) vorhanden ist mit mindestens einem mit der jeweils zuordenbaren Eingangsöffnung (52) des abzureinigenden Filterelementes (2) verbindbaren Rückspülarm (46), der von einem Getriebemotor (72) ansteuerbar ist.

## Claims

1. A filter device having a plurality of filter elements (2) which are accommodated in a filter housing (4) which is shut off to the top with a cover (26) and to the bottom by a bottom (24), having a filter inlet (6) for a fluid (8) to be filtered and a filter outlet (10) for the filtered fluid (12), a flow being able to pass through the filter elements (2) in both directions for filtration or backflushing, between at least some of the filter elements (2) and the filter outlet (10) in each instance one further filter element, in the form of a fine filter element (14), being arranged in regions of the flow path of the fluid which is pre-filtered by the respective filter element (2) assigned to the further filter element (14), the fine filter elements (14) being made to be tubular, **characterised in that** the filter elements (2) have an inner filter cavity (56) which on the end side at least partially overlaps an inlet opening (54) in the bottom (24), via which opening fouled fluid (8) can be routed both during filtration and also during backflushing, that each fine filter element (14) comprises a filter element (2), maintaining a definable distance radially, and that the fine filter elements (14) have a greater axial extension (A) than the filter elements (2).

2. The filter device according to Claim 1 or 2, **characterised in that** the fine filter elements (14) have at least three times the length of the filter elements (2).

3. The filter device according to Claim 1 or 2, **characterised in that** the filter elements (2) have a conical or cylindrical shape and the fine filter elements (14) have a cylindrical or conical shape.

4. The filter device according to any of Claims 1 to 3, **characterised in that** the fine filter elements (14) are formed as wound depth filters from paper, textiles or plastic materials.

5. The filter device according to any of Claims 1 to 4, **characterised in that** the fine filter elements (14) are formed from a fibrous mat which is not woven or wound.

6. The filter device according to any of Claims 1 to 5, **characterised in that** the fine filter elements (14) consisting of a pleated material are supported on a support element.

7. The filter device according to any of Claims 1 to 6, **characterised in that** the fine filter elements (14) have a larger pore size or mesh width on their side facing the fluid (8) which is to be filtered than on their clean side (18).

8. The filter device according to any of Claims 1 to 7, **characterised in that** the filter elements (2) and the fine filter elements (14) surrounding them are arranged at distances to one another along at least one arc or a closed imaginary circle within the filter housing (4).

9. The filter device according to any of Claims 1 to 8, **characterised in that** the filter elements (2) are made as slotted screen tube filter elements (20), preferably constructed from high-grade steel materials.

10. The filter device according to any of Claims 1 to 9, **characterised in that** the filter elements (2) and the fine filter elements (14) with a longitudinal axis parallel to the longitudinal axis (22) of the filter housing (4) are held in a coaxial arrangement within the filter housing (4).

11. The filter device according to any of Claims 1 to 10, **characterised in that** the filter housing (4) has a cylindrical shape and on the end side is provided with the screw-on bottom (24) and the cover (26), the cover (26) accommodating a holding means (28) located a distance (b) away for the fine filter elements (14).

12. The filter device according to Claim 11, **characterised in that** the holding means (28) is a disc (30) which can be inserted into the filter housing (4) and which has openings (32), adjacent to each opening (32) a fine filter element (14) being secured radially and/or axially detachably on the disc (30), and that the respective opening (32) for the fluid passage of a partial fluid amount (TF) at least partially overlaps the free fluid-conveying face of the fine filter element (14).

13. The filter device according to Claim 11 or 12, **characterised in that** the disc (30) is held by a retaining arm (34) which is supported at least radially on the filter housing (4) by retaining projections (37).

14. The filter device according to Claim 13, **characterised in that** the retaining arm (34) can be secured by a type of quarter-turn fastener (36).

15. The filter device according to Claim 14, **characterised in that** the disc (30) has a tightening screw (38) for axially clamping the quarter-turn fastener (36) and as part of the latter.

16. The filter device according to any of Claims 1 to 15, **characterised in that** for purposes of backflushing there is a backflushing means (44) with at least one backflushing arm (46) which can be connected to the respectively assignable inlet opening (52) of the filter element (2) which is to be cleaned and which arm can be actuated by a geared motor (72).

## Revendications

1. Dispositif de filtration, comprenant une pluralité d'éléments (2) de filtre reçue dans une enveloppe (4) de filtre fermée vers le haut par un couvercle (26) et vers le bas par un fond (24), comprenant une entrée (6) de filtre pour un fluide (8) à filtrer et une sortie (10) de filtre pour le fluide (12) filtré, les éléments (2) de filtre pouvant être parcourus dans les deux sens pour une filtration ou pour un lavage en retour, dans lequel, entre au moins une partie des éléments (2) filtrants et la sortie (10) de filtre, est disposé un autre élément de filtre, sous la forme d'un élément (14) de filtre fin, dans des parties du trajet du courant du fluide, qui est préfiltré par l'élément (2) de filtre respectif, associé à l'autre élément (14) de filtre, les éléments (14) de filtre fin étant tubulaires, **caractérisé en ce que** les éléments (2) de filtre ont une cavité (56) intérieure de filtre, qui recouvre, au moins en partie, du côté de l'extrémité, une ouverture (54) d'entrée du fond (24), par laquelle du fluide (8) pollué peut passer, tant à la filtration qu'également au lavage en retour, **en ce que** chaque élément (14) de filtre fin entoure un élément (2) de filtre radialement avec maintien d'une distance pouvant être donnée à l'avance et **en ce que** les éléments (14) de filtre fin ont une étendue axiale plus grande que les éléments (2) de filtre.

2. Dispositif de filtration suivant la revendication 1 ou 2, **caractérisé en ce que** les éléments (14) de filtre fin ont au moins trois fois la longueur des éléments (2) de filtre.

3. Dispositif de filtration suivant la revendication 1 ou 2, **caractérisé en ce que** les éléments (2) de filtre ont une forme conique ou cylindrique et les éléments (14) de filtre fin, une forme cylindrique ou conique.

4. Dispositif de filtration suivant l'une des revendications 1 à 3, **caractérisé en ce que** les éléments (14) de filtre fin sont sous la forme de filtre à lit profond enroulé en papier, en textiles ou en matières plastiques.

5. Dispositif de filtration suivant l'une des revendications 1 à 4, **caractérisé en ce que** les éléments (14) de filtre fin sont en un non tissé en forme de fibre, non tissé et enroulé.

6. Dispositif de filtration suivant l'une des revendications 1 à 5, **caractérisé en ce que** les éléments (14) de filtre fin, en une matière plissée, s'appuient sur un élément d'appui.

7. Dispositif de filtration suivant l'une des revendications 1 à 6, **caractérisé en ce que** les éléments (14) de filtre fin ont, de leur côté tourné vers le fluide (8) à filtrer, une dimension de pore ou de maille plus grande que de leur côté (18) propre.

8. Dispositif de filtration suivant l'une des revendications 1 à 7, **caractérisé en ce que** les éléments (2) de filtre et les éléments (14) de filtre fin les entourant sont disposés à l'intérieur de l'enveloppe (4) du filtre, à distance les uns des autres, suivant au moins un arc de cercle ou suivant un cercle fictif en soi fermé.

9. Dispositif de filtration suivant l'une des revendications 1 à 8, **caractérisé en ce que** les éléments (2) de filtre sont sous la forme d'éléments (20) de filtre tubulaires, à tamis à fente, de préférence en acier fin.

10. Dispositif de filtration suivant l'une des revendications 1 à 9, **caractérisé en ce que** les éléments (2) de filtre et les éléments (14) de filtre fin sont reçus dans l'enveloppe (4) du filtre, suivant un agencement coaxial, en ayant des axes longitudinaux parallèles à l'axe (22) longitudinal de l'enveloppe (4) du filtre.

11. Dispositif de filtration suivant l'une des revendications 1 à 10, **caractérisé en ce que** l'enveloppe (4) du filtre a une forme cylindrique et est pourvue, du côté de l'extrémité, du fond (24) pouvant être vissé et du couvercle (26), le couvercle (26) ayant, pour les éléments (14) de filtre fin, un dispositif (28) de maintien monté à distance (b) de lui.

12. Dispositif de filtration suivant la revendication 11, **caractérisé en ce que** le dispositif (28) de maintien est un disque (30), qui peut être inséré dans l'enveloppe (4) du filtre et qui a des traversées (32), dans lequel un élément (14) de filtre fin est fixé, de manière mobile radialement et/ou axialement au disque (30), au voisinage de chaque traversée (32), et **en ce que** la traversée (32) respective recouvre, au moins en partie, pour un passage d'une quantité (TF) partielle de fluide, le côté frontal libre de conduite de fluide de l'élément (14) de filtre fin.

13. Dispositif de filtration suivant la revendication 11 ou 12, **caractérisé en ce que** le disque (30) est maintenu par un bras (34) de maintien s'appuyant au moins radialement sur l'enveloppe (4) du filtre par des becs (37) de maintien.

14. Dispositif de filtration suivant la revendication 13, **caractérisé en ce que** le bras (34) de maintien peut être fixé par un type de fermeture (36) à baïonnette.

15. Dispositif de filtration suivant la revendication 14, **caractérisé en ce que** le disque (30) a une vis (38) de blocage pour le serrage axial de la fermeture (36) à baïonnette et en tant que partie de celle-ci.

16. Dispositif de filtration suivant l'une des revendications 1 à 15, **caractérisé en ce qu'**il y a, pour le lavage en retour, un dispositif (44) de lavage en retour, ayant au moins un bras (46) de lavage en retour pouvant être relié à au moins une ouverture (52) d'entrée, pouvant être associée respectivement, de l'élément (2) de filtre à nettoyer, bras (46), qui peut être commandé par un motoréducteur (72).
